# EUROPÄISCHE PATENTANMELDUNG

(11) **EP 4 696 599 A1**
(43) Veröffentlichungstag der Anmeldung: **18.02.2026**
(21) Anmeldenummer: 25195373.3
(22) Anmeldetag: 12.08.2025
(51) Int. Cl.: B62M 6/90, B62J 43/13, B62J 43/23

(54) **ELEKTROFAHRRAD MIT ANTRIEBSAKKUANORDNUNG UND ANTRIEBSAKKUANORDNUNG FÜR EIN ELEKTROFAHRRAD**

(30) Priorität: 14.08.2024 DE 202024104592 U
(71) Anmelder: Smartscale NewCo AG, 4950 Huttwil (CH)
(72) Erfinder: HE, Lingfei, 64832 Babenhausen (DE); HENDO, Naggy, 5745 Safenwil (CH); MA, Yunlei, Shanghai (CN)
(74) Vertreter: Isarpatent

(57) **Zusammenfassung**

Die Erfindung betrifft ein Elektrofahrrad (1) mit einem Fahrradrahmen (2) und zumindest einer einen Antriebsakku (6) aufweisenden Akkuanordnung (8), wobei der Antriebsakku (6) eine Befestigungseinrichtung (12) zur lösbaren Befestigung an einer rahmenseitigen Halterung (10) mit einem Befestigungsvorsprung (14) aufweist, dadurch gekennzeichnet, dass eine Aufnahme (20) des Antriebsakkus (6) mit dem Befestigungsvorsprung (14) der Halterung (10) derart in Eingriff bringbar ist, dass der Antriebsakku (6) um den Befestigungsvorsprung (14) in die Halterung (10) einschwenkbar und mittels eines Rasthebels (22) verriegelbar ist.

## Beschreibung

Die vorliegende Erfindung betrifft ein Elektrofahrrad gemäß dem Oberbegriff des Anspruchs 1 sowie eine Antriebsakkuanordnung für ein Elektrofahrrad gemäß dem Oberbegriff des Anspruchs 21.

Aus dem Stand der Technik sind Elektrofahrräder, sogenannte E-Bikes, mit elektrischer Motorunterstützung bekannt, welche neben einem Hauptakku einen Zusatzakku zur Reichweitensteigerung aufweisen. Der Zusatzakku ist an einer rahmenseitigen Halterung an einem Rahmenrohr, wie vorzugsweise einem Ober-, Unter- oder Sitzrohr des Fahrradrahmens befestigbar. Die Halterung ist beispielsweise an Befestigungspunkten einer Trinkflaschenhalterung befestigbar. Der Zusatzakku wird bei derartigen Systemen insbesondere von oben bzw. unten in die rahmenseitige Halterung eingesetzt und verriegelt. Bei alternativen Akkuanordnungen wird der Zusatzakku in Längsrichtung des Rahmenrohres in die Halterung eingeschoben.

Aus dem Stand der Technik sind ferner Akkuanordnungen bekannt, gemäß denen die rahmenseitige Halterung zwei beabstandet zueinander angeordnete Vorsprünge aufweist, wobei der Zusatzakku in einen eine Schwenkachse ausbildenden Vorsprung einhängbar und in den zweiten Vorsprung mit einem Verriegelungssystem des Zusatzakkus einschwenkbar ist.

Bei einem vergleichbaren System wird der Zusatzakku als Hauptakku verwendet. Hierzu ist dann nicht zwingend ein weiterer Antriebsakku erforderlich.

Nachteilig bei diesen Lösungen ist es, dass zwei Vorsprünge vorzusehen sind. Weiterhin nachteilig ist das am Gehäuse des Zusatzakkus bzw. Antriebsakkus vorzusehende Verriegelungssystem.

Der Erfindung liegt daher die Aufgabe zugrunde, ein Elektrofahrrad und eine Antriebsakkuanordnung für ein Elektrofahrrad mit einer verbesserten Montage bereitzustellen, welche eine schnelle, einfache Montage und Demontage des Antriebsakkus bzw. Zusatzakkus ermöglichen.

Diese Aufgabe wird durch ein Elektrofahrrad mit der Merkmalskombination des Anspruchs 1 sowie mittels einer Antriebsakkuanordnung für ein Elektrofahrrad gemäß Anspruch 21 gelöst.

Das erfindungsgemäße Elektrofahrrad weist einen Fahrradrahmen sowie zumindest eine einen Antriebsakku aufweisende Antriebsakkuanordnung auf, wobei der Antriebsakku eine Befestigungseinrichtung zur lösbaren Befestigung an einer rahmenseitigen Halterung mit einem Befestigungsvorsprung aufweist. Erfindungsgemäß ist die Aufnahme des Antriebsakkus mit dem Befestigungsvorsprung der rahmenseitigen Halterung derart in Eingriff bringbar, dass der Antriebsakku bei seiner Montage um den Befestigungsvorsprung in die rahmenseitigen Halterung einschwenkbar und mittels eines Rasthebels verriegelbar ist. Nach Betätigung des Rasthebels kann der Antriebsakku herausgeschenkt und abgenommen werden. Dadurch ist eine schnelle, einfache Montage und Demontage des Antriebsakkus ermöglicht.

Bei einem bevorzugten Ausführungsbeispiel der Erfindung hat das Elektrofahrrad einen Fahrradrahmen, wobei ein Hauptakku zumindest abschnittsweise in den Fahrradrahmen einsetzbar ist, wobei der Antriebsakku als Zusatzakku vorgesehen ist. Hierbei hat das Fahrrad einen Hauptakku und einen Zusatzakku.

Im Folgenden können die Begriffe Antriebskku und Zusatzakku gleichgestellt wahlweise verwendet werden.

Erfindungsgemäß wird es bevorzugt, wenn der Rasthebel während dem Einschwenken des Antriebsakkus beispielsweise mittels eines Rastvorsprungs automatisch in den Antriebsakku eingreift und diesen fixiert. Der Antriebsakku kann dadurch mit einer Hand angesetzt, eingeschwenkt und festgelegt werden. Der Rasthebel wird hierbei vorzugsweise aufgrund einer Schrägfläche automatisch gespannt und schnappt selbststätig in eine Rastausnehmung ein.

Als besonders vorteilhaft hat es sich erwiesen, wenn die Halterung eine Führungsbahn zur Aufnahme eines Führungsvorsprungs des Antriebsakkus aufweist. Der Antriebsakku wird hierbei vorzugsweise während der Montage mit dem Führungsvorsprung in die Führungsbahn der rahmenseitigen Halterung eingeschwenkt. Dadurch ist der Antriebsakku relativ zum Fahrradrahmen sicher fixiert.

Der Befestigungsvorsprung der Halterung hat vorzugsweise einen Kopfabschnitt mit einer gegenüber einem Schaftbereich vergrößerter Breite.

Gemäß eines bevorzugten Ausführungsbeispiels der Erfindung ist der Befestigungsvorsprung zylinderförmig ausgeführt und weist einen Kopfabschnitt mit gegenüber einem Schaftbereich vergrößerter Durchmesser auf. Vorzugsweise ist der Befestigungsvorsprung hierbei etwa pilzförmig ausgebildet.

Vorzugsweise weist der Befestigungsvorsprung einen zylinderförmigen Schaftbereich auf, wobei ein Kopfabschnitt als Teilzylinder ausgebildet ist.

Bei einer alternativen Ausführungsform der Erfindung hat der Befestigungsvorsprung zumindest abschnittsweise einen dreieckigen Querschnitt.

Gemäß einer vorteilhaften Ausgestaltung der Erfindung ist die Aufnahme des Antriebsakkus etwa V-förmig ausgebildet. Die Öffnung der V-Aufnahme ist hierbei bevorzugt zum Endabschnitt des Antriebsakkus hin ausgerichtet. Dadurch kann der Antriebsakku besonders einfach in die Halterung eingeführt und verschwenkt werden.

Der Befestigungsvorsprung hintergreift mit seinem Kopfabschnitt im montierten Zustand vorzugsweise einen Stufenabsatz der Aufnahme des Antriebsakkus. Dadurch ist der Antriebsakku formschlüssig in diesem Bereich relativ zur Halterung gesichert.

Als besonders vorteilhaft hat es sich erwiesen, wenn die Führungsbahn zumindest abschnittsweise bogenförmig gekrümmt ist.

Der Krümmungsradius entspricht vorzugsweise dem Abstand der Führungsbahn zur Mitte des Befestigungsvorsprungs.

Erfindungsgemäß ist es vorteilhaft, wenn die Führungsbahn als etwa U-förmige Führungsschiene mit zwei einander gegenüberliegenden und über einen Mittelbereich verbundenen Führungswangen ausgebildet ist. Vorzugsweise ist die kurvenbahnförmige Führungsschiene neben dem Rasthebel auf der Seite des Befestigungsvorsprungs angeordnet.

Vorzugsweise sind die Führungswangen zueinander geneigt ausgeführt. Dadurch ist der Führungsvorsprung des Antriebsakkus formschlüssig seitlich in die Führungsbahn einführbar und anschließend derart gehalten, dass er in einer Richtung weg von der Halterung unbeweglich ist.

Der Führungsvorsprung des Antriebsakkus ist bei einer bevorzugten Ausgestaltung mit zwei einander gegenüberliegenden, nach außen weisenden Kragvorsprüngen versehen.

Bei einem vorteilhaften Ausführungsbeispiel ist der Rasthebel an der Halterung vorgesehen. Als besonders vorteilhaft hat es sich erwiesen, wenn der Rasthebel außerhalb der Führungsbahn im Bereich eines freien Endes der Halterung gegenüber dem Befestigungsvorsprung vorgesehen ist.

Der Rasthebel erstreckt sich vorzugsweise quer zu einer Längsebene des Fahrradrahmens.

Gemäß einer Ausgestaltungsform der Erfindung weist der Rasthebel eine Federzunge mit zumindest einem Rastelement und einem Betätigungsabschnitt auf.

Besonders vorteilhaft ist es, wenn das Rastelement des Rasthebels einen mit einer Rastausnehmung des Antriebsakkus in Eingriff bringbaren Rastvorsprung aufweist. Wenn der federelastisch mit der Halterung verbundene Rasthebel über den Betätigungsabschnitt betätigt wird, bewegt sich die Federzunge weg vom Antriebsakku so dass der Rastvorsprung außer Eingriff mit der Rastausnehmung des Antriebsakkus gebracht wird. Der Antriebsakku ist nun entriegelt und kann verschwenkt werden. Dadurch wird der Führungsvorsprung des Antriebsakkus außer Eingriff mit der Führungsbahn der Halterung gebracht. Der Antriebsakku kann nun aus der Halterung gezogen werden, wobei sich der Befestigungsvorsprung aus der Aufnahme des Antriebsakkus bewegt.

Fertigungstechnisch vorteilhaft ist es, wenn der Rasthebel einstückig mit der Halterung ausgebildet ist. Der Rasthebel ist hierbei vorzugsweise über ein Feststoffgelenk mit der Halterung verbunden.

Zwischen dem Befestigungsvorsprung und dem Rasthebel sind bevorzugt zwei Befestigungsausnehmungen, vorzugsweise Langlöcher, zur Aufnahme von jeweils einer Befestigungsschraube angeordnet. Die Befestigungspunkte sind hierbei vorzugsweise die rahmenseitigen Befestigungsgewinde für eine Flaschenhalterung.

Erfindungsgemäß kann der Antriebsakku seitlich in ein Rahmendreieck des Fahrradrahmens einschwenbar sein. Bei einem bevorzugten Ausführungsbeispiel ist der Antriebsakku an der Unterseite eines Oberrohres des Fahrradrahmens mittels der Halterung festlegbar. Gemäß einer alternativen Ausführung ist der Antriebsakku an der Oberseite eines Unterrohres des Fahrradrahmens mittels der Halterung fixierbar. Bei einem weiteren bevorzugten Ausfürhungsbeispiel ist der Antriebsakku an einem Sitzrohr montierbar.

Besonders vorteilhaft ist die erfindungsgemäße Antriebsakkuanordnung zur universellen Montage an unterschiedlich ausgebildeten Fahrradrahmen geeignet.

Eine erfindungsgemäße Antriebsakkuanordnung für ein Elektrofahrrad hat einen Antriebsakku, wobei der Antriebsakku eine Befestigungseinrichtung zur lösbaren Befestigung an einer dem Fahrradrahmen zugeordneten rahmenseitigen Halterung mit einem Befestigungsvorsprung aufweist. Erfindungsgemäß ist eine Aufnahme des Antriebsakkus mit dem Befestigungsvorsprung der Halterung derart in Eingriff bringbar, dass der Antriebsakku um den Befestigungsvorsprung in die Halterung einschwenkbar und mittels eines Rasthebels verriegelbar ist.

Der Antriebsakku kann hierbei als alleiniger Antriebsakku bzw. Hauptakku am Fahrrad vorgesehen sein. Alternativ ist der Antriebsakku als Zusatzakku zusätzlich zu einen beispielsweise im Rahmen angeordneten Hauptakku am Fahrrad vorgesehen.

Weitere bevorzugte Ausführungsformen sind Gegenstand der Unteransprüche.

Im Folgenden werden bevorzugte Ausführungsformen der vorliegenden Erfindung unter Bezugnahme auf die beiliegenden Zeichnungen näher erläutert. Dabei zeigen die Zeichnungen im Einzelnen:
Figur 1 eine Draufsicht eines erfindungsgemäßen Elektrofahrrads im Bereich eines Zusatzakkus gemäß eines ersten Ausführungsbeispiels;
Figur 2 eine perspektivische Darstellung einer Halterung mit Zusatzakku gemäß eines weiteren Ausführungsbeispiels;
Figur 3 eine weitere perspektivische Darstellung der Halterung mit Zusatzakku;
Figur 4 eine weitere perspektivische Darstellung der Halterung mit Zusatzakku;
Figur 5 eine Einzeldarstellungen der Halterung;
Figur 6 eine weitere Einzeldarstellungen der Halterung;
Figur 7 eine weitere Einzeldarstellungen der Halterung;
Figur 8 eine weitere Einzeldarstellungen der Halterung;
Figur 9 eine weitere Einzeldarstellungen der Halterung;
Figur 10 eine weitere Einzeldarstellungen der Halterung;
Figur 11 eine weitere Einzeldarstellungen der Halterung;
Figur 12 eine Darstellung des Zusatzakkus mit Halterung;
Figur 13 eine weitere Darstellung des Zusatzakkus mit Halterung;
Figur 14 eine Darstellung des Zusatzakkus ohne Halterung;
Figur 15 eine weitere Darstellung des Zusatzakkus ohne Halterung;
Figur 16 eine weitere Darstellung des Zusatzakkus ohne Halterung;
Figur 17 eine weitere Darstellung des Zusatzakkus ohne Halterung;
Figur 18 eine weitere Darstellung des Zusatzakkus ohne Halterung und
Figur 19 eine Einzeldarstellungen einer alternativen Halterung.

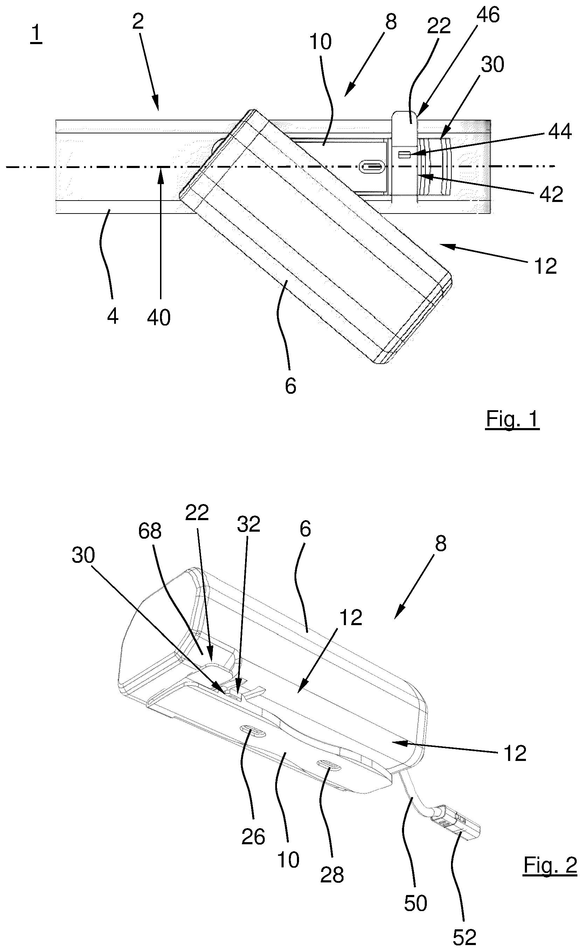

Figur 1 zeigt eine Draufsicht eines erfindungsgemäßen Elektrofahrrads 1 mit einem schematisch dargestellten Fahrradrahmen 2 im Bereich eines Oberrohrs 4 mit einer einen Zusatzakku 6 aufweisenden Zusatzakkuanordnung 8 während der Montage bzw. dem Einschwenken des Zusatzakkus 6 in eine rahmenseitige Halterung 10 gemäß eines ersten Ausführungsbeispiels. Bei diesem erfindungsgemäßen Ausführungsbeispiel ist im Rahmen ein Hauptakku vorgesehen und der Zusatzakku 6 als zusätzlicher Range Extender vorgesehen. Der Zusatzakku 6 weist eine Befestigungseinrichtung 12 zur lösbaren Befestigung an der rahmenseitigen Halterung 10 auf.

Die Figuren 2 bis 4 zeigen jeweils eine perspektivische Darstellung des vollständig in eine Halterung 10 gemäß eines zweiten Ausführungsbeispiels eingeschwenkten und dort fixierten Zusatzakkus 6 ohne Fahrradrahmen.

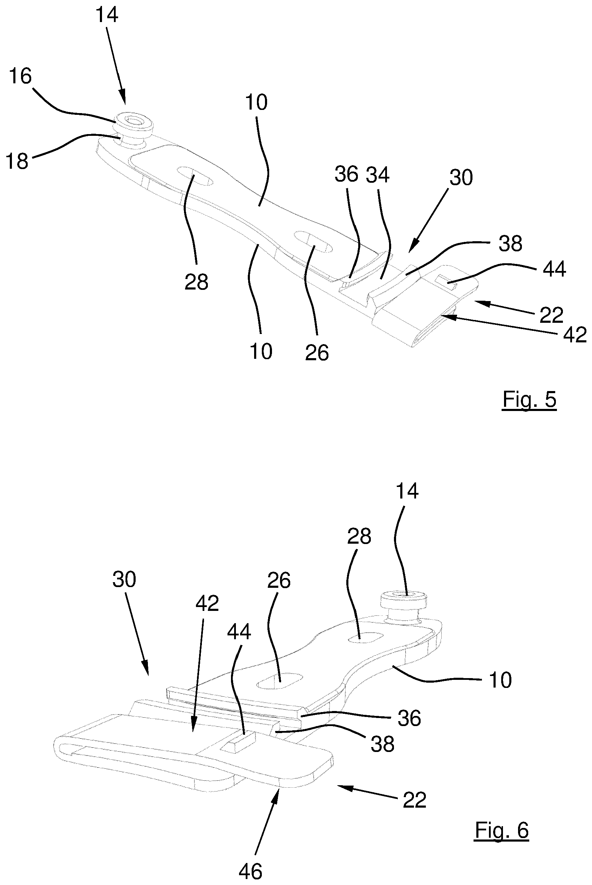

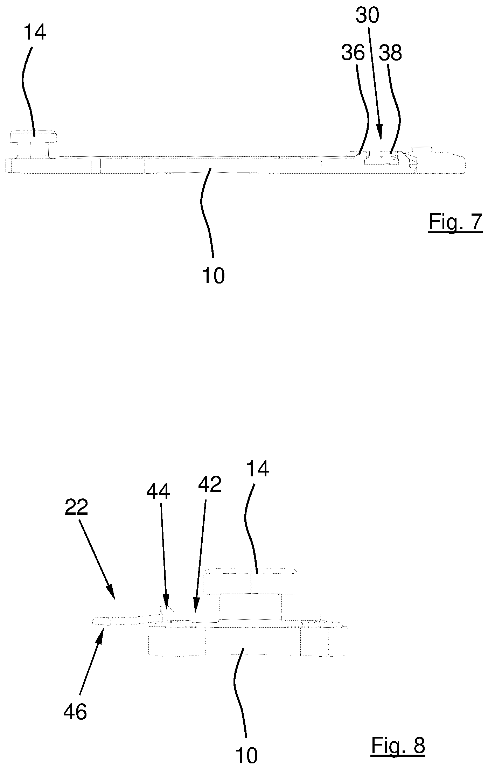

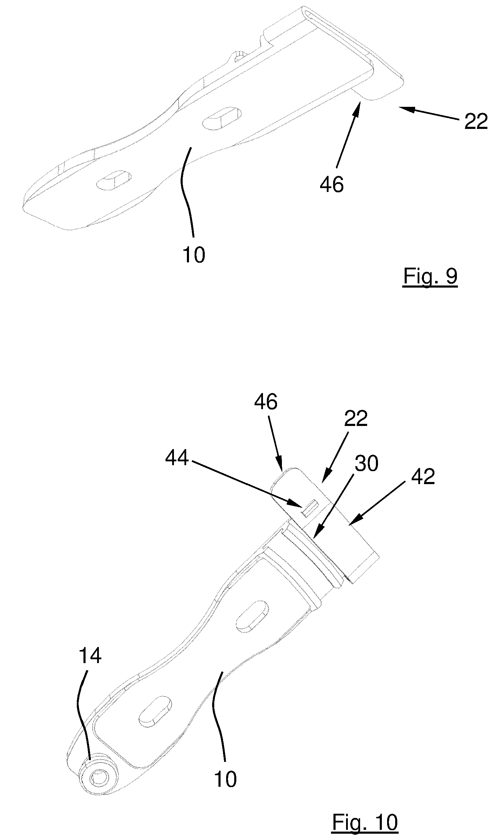

Gemäß den Figuren 5 bis 11, welche Einzeldarstellungen der Halterung 10 zeigen, weist die Halterung 10 einen Befestigungsvorsprung 14 auf. Der Befestigungsvorsprung 14 ist zylinderförmig ausgeführt und hat einen Kopfabschnitt 16 mit gegenüber einem Schaftbereich 18 vergrößertem Durchmesser. Der Befestigungsvorsprung 14 ist im Querschnitt etwa T- oder pilzförmig ausgebildet.

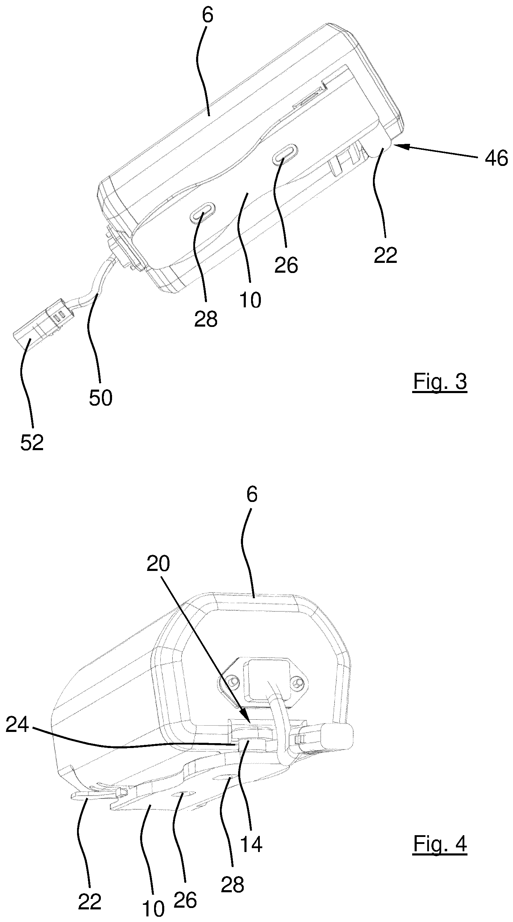

Wie insbesondere in Figur 4 gezeigt, ist eine Aufnahme 20 des Zusatzakkus 6 mit dem Befestigungsvorsprung 14 der rahmenseitigen Halterung 10 derart in Eingriff bringbar, dass der Zusatzakku 6 bei seiner Montage um den Befestigungsvorsprung 14 in die rahmenseitigen Halterung 10 einschwenkbar und mittels eines Rasthebels 22 verriegelbar ist. Der Befestigungsvorsprung 14 hintergreift mit seinem Kopfabschnitt 16 im montierten Zustand einen Stufenabsatz 24 der Aufnahme 20 des Zusatzakkus 6. Dadurch ist der Zusatzakku 6 formschlüssig in diesem Bereich relativ zur Halterung 10 gesichert. Nach Betätigung des Rasthebels 22 kann der Zusatzakku 6 herausgeschenkt und abgenommen werden.

Zwischen dem Befestigungsvorsprung 14 und dem Rasthebel 22 sind zwei als Langlöcher 26, 28 ausgeführte Befestigungsausnehmungen zur Aufnahme jeweils einer nicht dargestellten Befestigungsschraube angeordnet. Die Befestigungspunkte sind hierbei die rahmenseitigen Befestigungsgewinde für eine Flaschenhalterung.

Wie insbesondere den Figuren 5 bis 11 zu entnehmen ist, weist die Halterung 10 eine Führungsbahn 30 zur Aufnahme eines Führungsvorsprungs 32 des Zusatzakkus 6 auf. Die Führungsbahn 30 ist bogenförmig gekrümmt ausgebildet und erstreckt sich in Querrichtung über die gesamte Breite der Halterung 10. Der Krümmungsradius entspricht hierbei dem Abstand der Führungsbahn 30 zur Mitte des Befestigungsvorsprungs 14. Die Führungsbahn 30 ist als etwa U-förmige Führungsschiene mit zwei einander gegenüberliegenden und über einen Mittelbereich 34 verbundenen Führungswangen 36, 38 ausgebildet. Die Führungsschiene 30 ist neben dem Rasthebel 22 auf der Seite des Befestigungsvorsprungs 14 angeordnet. Die Führungswangen 36, 38 sind zueinander geneigt ausgeführt. Dadurch ist der Führungsvorsprung 32 des Zusatzakkus 6 formschlüssig seitlich in die Führungsbahn 30 einführbar und anschließend derart gehalten, dass er in einer Richtung weg von der Halterung 10 unbeweglich ist.

Der Rasthebel 22 ist an der Halterung 10 außerhalb der Führungsbahn 30 im Bereich eines freien Endes der Halterung 10 gegenüber dem Befestigungsvorsprung 14 vorgesehen. Alternativ kann der Rasthebel 22 wie in Figur 1 dargestellt innerhalb der Führungsbahn 30 angeordnet sein, d. h. auf der dem Schwenkpunkt zugeordneten Seite der Führungsbahn 30 vorgesehen sein. Der Rasthebel 22 ist einstückig mit der Halterung 10 ausgebildet. Der Rasthebel 22 ist hierbei über ein bogenförmiges Feststoffgelenk mit der Halterung 10 verbunden. Das Feststoffgelenk ist im Randbereich der Halterung 10 angeordnet. Der Rasthebel 22 erstreckt sich quer zu einer Längsebene 40 des Fahrradrahmens 2 und weist eine Federzunge 42 mit einem als Rastvorsprung 44 ausgebildeten, etwa rechteckigen mit Schrägfläche versehenen Rastelement und einen daneben vorgesehenen Betätigungsabschnitt 46 auf. Das Rastelement 44 ist auf einer dem Zusatzakku 6 zugewandten Seite der Federzunge 42 angeordnet. Der Betätigungsabschnitt 46 erstreckt sich ausgehend vom Bereich des Rastvorsprungs 44 über die Breite der Halterung 10 nach außen und ist dadurch gut betätigbar.

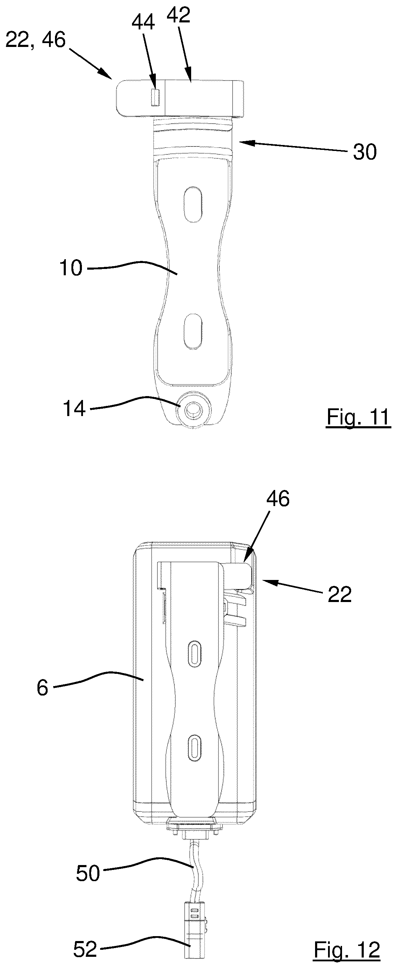

Wie insbesondere aus den Figuren 12 bis 18 ersichtlich, welche den Zusatzakku 6 mit Halterung 10 bzw. lediglich den Zusatzakku 6 zeigen, wird der Zusatzakku 6 während der Montage mit dem Führungsvorsprung 32 in die Führungsbahn 30 der rahmenseitigen Halterung 10 eingeschwenkt bis der Rastvorsprung 44 des Rasthebels 22 der Halterung 10 in eine im Bereich der Führungsbahn 30 vorgesehene, etwa rechteckförmige, taschenartige Rastausnehmung 48 des Zusatzakkus 6 eingreift. Der Zusatzakku 6 ist über ein Verbindungskabel 50 mit Steckverbinder 52 mit dem Fahrrad elektrisch verbindbar.

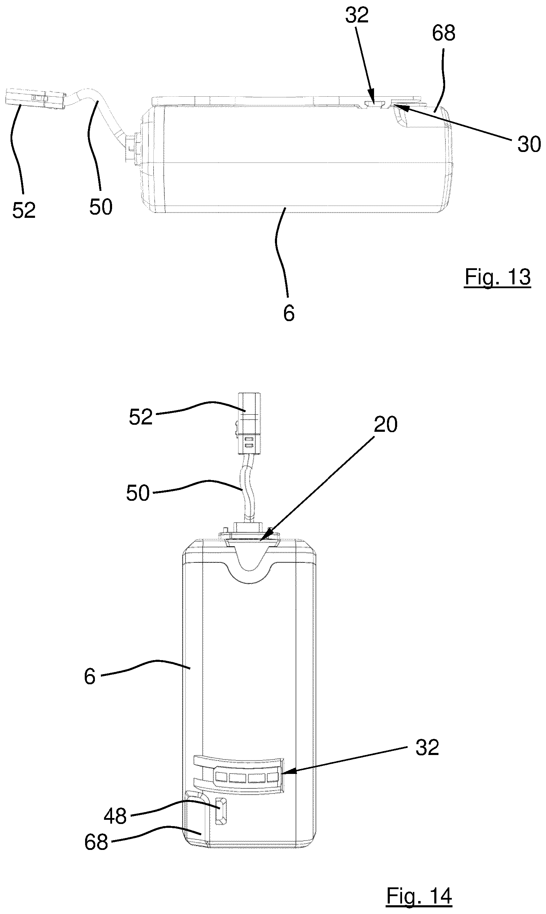

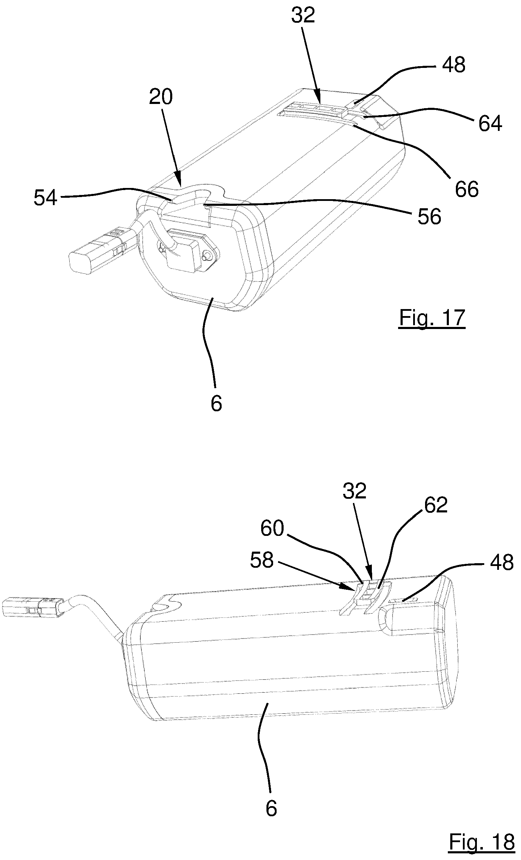

Wie insbesondere Figur 14 zu entnehmen ist, welche eine Ansicht von unten des Zusatzakkus 6 zeigt sowie Figur 17, welche eine perspektivische Darstellung des Zusatzakkus 6 zeigt, ist die Aufnahme 20 für den Befestigungsvorsprung 14 etwa V-förmig ausgebildet. Die Öffnung der V-Aufnahme 20 ist hierbei bevorzugt zum Endabschnitt des Zusatzakkus 6 hin ausgerichtet. Die Aufnahme 20 des Zusatzakkus 6 ist mit zwei einander gegenüberliegenden, nach innen weisende Kragabschnitten 54, 56 versehen, welche eine Hinterschneidung ausbilden. Dadurch kann der Zusatzakku 6 besonders einfach in den Bereich des Befestigungsvorsprung 14 der Halterung 10 eingeführt und anschließend verschwenkt werden, ohne sich während dem Verschwenken vom Rahmen weg zu bewegen. Der Zusatzakku 6 kann dadurch mit einer Hand angesetzt, eingeschwenkt und festgelegt werden. Der Rasthebel 22 wird hierbei aufgrund der Schrägfläche automatisch gespannt und schnappt in die Rastausnehmung ein.

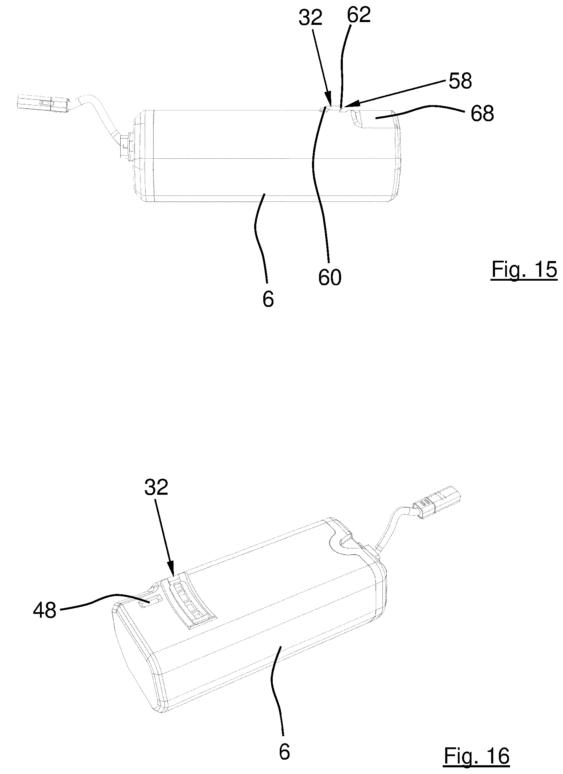

Der Führungsvorsprung 32 des Zusatzakkus 6 ist bogenförmig entsprechend der Führungsbahn 30 gekrümmt und weist einen Kopfabschnitt 58 mit zwei entgegengesetzt zueinander auskragenden Vorsprüngen 60, 62 auf (siehe Figur 15). Die Vorsprünge 60, 62 weisen auf der Unterseite jeweils eine Schrägfläche auf, welche V-förmig zu einem Mittelteil verlaufen. Insgesamt ergibt sich ein etwa T-förmiger Querschnitt des Führungsvorsprungs 32. Unterhalb der auskragenden Vorsprünge 60, 62 sind zwei entsprechend bogenförmig, parallel zueinander verlaufende Nuten 64, 66 vorgesehen. Ein erster Endabschnitt der Nuten 64, 66 schließt bündig mit dem Führungsvorsprung 32 ab. Die zweiten Enden der Nuten 64, 66 erstrecken sich bis in einen Randbereich des Zusatzakkus 6.

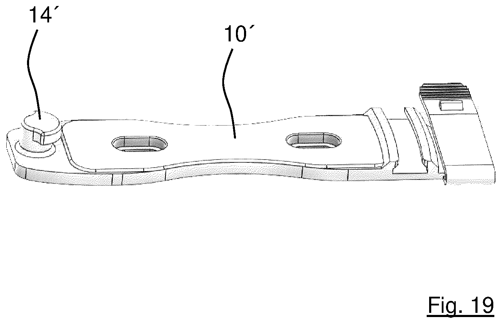

Gemäß Figur 19, welche eine Variante der Halterung 10 zeigt, hat der Befestigungsvorsprung 14 bei diesem alternativen Ausführungsbeispiel einen zumindest abschnittsweise teilzylinderförmigen, etwa dreieckigen Kopfabschnitt. Die breitere Seite des Kopfabschnitts ist hierbei der Führungsbahn zugewandt

Im Folgenden wird die Demontage bzw. das Abnehmen des Zusatzakkus 6 erläutert. Hierzu wird der federelastisch mit der Halterung 10 verbundene Rasthebel 22 über den Betätigungsabschnitt 46 in Richtung des Fahrradrahmens betätigt, wobei sich die Federzunge 42 weg vom Zusatzakku 6 bewegt, so dass der Rastvorsprung 44 des Rasthebels 22 außer Eingriff mit der Rastausnehmung 48 des Zusatzakkus 6 gebracht wird. Zur Erleichterung der Betätigung des Rasthebels 22 ist am Zusatzakku 6 im Bereich des Rasthebels 22 eine Ausklinkung 68 vorgesehen. Der Zusatzakku 6 ist entriegelt und kann verschwenkt werden. Dadurch wird der Führungsvorsprung 32 des Zusatzakkus 6 außer Eingriff mit der Führungsbahn 30 der Halterung 10 gebracht. Der Zusatzakku 6 kann nun aus der Halterung 10 gezogen werden, wobei sich der Befestigungsvorsprung 14 aus der Aufnahme 20 des Zusatzakkus 6 bewegt, so dass dieser vollständig freigegeben ist.

Offenbart ist ein Elektrofahrrad 1 mit einem Fahrradrahmen 2 sowie einer zumindest einen Antriebsakku 6 aufweisenden Antriebsakkuanordnung 8, wobei der Antriebsakku 6 eine Befestigungseinrichtung 12 zur lösbaren Befestigung an einer rahmenseitigen Halterung 10 mit Befestigungsvorsprung 14 aufweist. Erfindungsgemäß ist eine Aufnahme 20 des Antriebsakkus 6 mit dem Befestigungsvorsprung 14 der rahmenseitigen Halterung 10 derart in Eingriff bringbar, dass der Antriebsakku 6 um den Befestigungsvorsprung 14 in die Halterung 10 einschwenkbar und mittels eines Rasthebels 22 verriegelbar ist. Weiterhin offenbart ist eine Antriebsakkuanordnung 8 für ein Elektrofahrrad 1.

### Bezugszeichenliste

- 1: Elektrofahrrad
- 2: Fahrradrahmen
- 4: Oberrohr
- 6: Zusatzakku/Antriebsakku
- 8: Antriebsakkuanordnung
- 10: Halterung
- 12: Befestigungseinrichtung
- 14: Befestigungsvorsprung
- 16: Kopfabschnitt
- 18: Schaftbereich
- 20: Aufnahme
- 22: Rasthebel
- 24: Stufenabsatz
- 26: Langloch
- 28: Langloch
- 30: Führungsbahn
- 32: Führungsvorsprung
- 34: Mittelbereich
- 36: Führungswange
- 38: Führungswange
- 40: Längsebene
- 42: Federzunge
- 44: Rastvorsprung
- 46: Betätigungsabschnitt
- 48: Rastausnehmung
- 50: Verbindungskabel
- 52: Steckverbinder
- 54: Kragabschnitt
- 56: Kragabschnitt
- 58: Kopfabschnitt
- 60: Vorsprung
- 62: Vorsprung
- 64: Nut
- 66: Nut
- 68: Ausklinkung

## Patentansprüche

1. Elektrofahrrad (1) mit einem Fahrradrahmen (2) und zumindest einer einen Antriebsakku (6) aufweisenden Akkuanordnung (8), wobei der Antriebsakku (6) eine Befestigungseinrichtung (12) zur lösbaren Befestigung an einer rahmenseitigen Halterung (10) mit einem Befestigungsvorsprung (14) aufweist, **dadurch gekennzeichnet, dass** eine Aufnahme (20) des Antriebsakkus (6) mit dem Befestigungsvorsprung (14) der Halterung (10) derart in Eingriff bringbar ist, dass der Antriebsakku (6) um den Befestigungsvorsprung (14) in die Halterung (10) einschwenkbar und mittels eines Rasthebels (22) verriegelbar ist.

2. Elektrofahrrad nach Anspruch 1, wobei die Halterung (10) eine Führungsbahn (30) zur Aufnahme eines Führungsvorsprungs (32) des Antriebsakkus (6) aufweist.

3. Elektrofahrrad nach Anspruch 1 oder 2, wobei der Befestigungsvorsprung (14) der Halterung (10) einen Kopfabschnitt (16) mit einer gegenüber einem Schaftbereich (18) vergrößerten Breite aufweist, und/oder
wobei der Befestigungsvorsprung (14) zylinderförmig ausgeführt ist und einen Kopfabschnitt (16) mit gegenüber einem Schaftbereich (18) vergrößerten Durchmesser aufweist.

4. Elektrofahrrad nach einem der vorhergehenden Ansprüche, wobei der Befestigungsvorsprung (14) einen zylinderförmigen Schaftbereich (18) aufweist und ein Kopfabschnitt als Teilzylinder ausgebildet ist, und/oder
wobei der Befestigungsvorsprung (14) zumindest abschnittsweise einen dreieckigen Querschnitt aufweist, und/oder
wobei der Befestigungsvorsprung (14) im montierten Zustand einen Stufenabsatz (24) der Aufnahme (20) des Antriebsakkus(6) hintergreift.

5. Elektrofahrrad nach einem der vorhergehenden Ansprüche, wobei die Aufnahme (20) des Antriebsakkus (6) in der Draufsicht von oben etwa V-förmig ausgebildet ist.

6. Elektrofahrrad nach einem der Ansprüche 2 bis 5, wobei die Führungsbahn (30) zumindest abschnittsweise bogenförmig gekrümmt ist, wobei der Krümmungsradius insbesondere dem Abstand der Führungsbahn (30) zur Mitte des Befestigungsvorsprungs (14) entspricht.

7. Elektrofahrrad nach einem der Ansprüche 2 bis 6, wobei die Führungsbahn (30) als etwa U-förmige Führungsschiene mit zwei einander gegenüberliegenden und über einen Mittelbereich (34) verbundenen Führungswangen (36, 38) ausgebildet ist, wobei die Führungswangen (36, 38) insbesondere zueinander geneigt sind.

8. Elektrofahrrad nach einem der vorhergehenden Ansprüche, wobei der Führungsvorsprung (32) des Antriebsakkus (6) zwei einander gegenüberliegende, nach außen weisende Vorsprünge (60, 62) aufweist.

9. Elektrofahrrad nach einem der vorhergehenden Ansprüche, wobei der Rasthebel (22) an der Halterung (10) vorgesehen ist, und/oder
wobei sich der Rasthebel (22) quer zu einer Längsebene (40) des Fahrradrahmens (2) erstreckt.

10. Elektrofahrrad nach einem der vorhergehenden Ansprüche, wobei der Rasthebel (22) eine Federzunge (42) mit zumindest einem Rastelement (44) und einen Betätigungsabschnitt (46) aufweist, wobei das Rastelement des Rasthebels (22) insbesondere einen mit einer Rastausnehmung (48) des Antriebsakkus (6) in Eingriff bringbaren Rastvorsprung (44) aufweist.

11. Elektrofahrrad nach einem der vorhergehenden Ansprüche, wobei der Rasthebel (22) einstückig mit der Halterung (10) ausgebildet ist.

12. Elektrofahrrad nach einem der vorhergehenden Ansprüche, wobei der Antriebsakku (6) seitlich in ein Rahmendreieck des Fahrradrahmens (2) einschwenbar ist.

13. Elektrofahrrad nach einem der vorhergehenden Ansprüche, mit zumindest einem abschnittsweise im Fahrradrahmen (2) angeordneten Hauptakku, wobei der Antriebsakku ein Zusatzakku (6) ist.

14. Antriebsakkuanordnung für ein Elektrofahrrad (1) mit zumindest einem Antriebsakku (6), wobei der Antriebsakku (6) eine Befestigungseinrichtung (12) zur lösbaren Befestigung an einer dem Fahrradrahmen (2) zugeordneten rahmenseitigen Halterung (10) mit einem Befestigungsvorsprung (14) aufweist, **dadurch gekennzeichnet, dass** eine Aufnahme (22) des Antriebsakkus (6) mit dem Befestigungsvorsprung (14) der Halterung (10) derart in Eingriff bringbar ist, dass der Antriebsakku (6) um den Befestigungsvorsprung (14) in die Halterung (10) einschwenkbar und mittels eines Rasthebels (22) verriegelbar ist.

15. Antriebsakkuanordnung für ein Elektrofahrrad (1), mit zumindest einem abschnittsweise im Fahrradrahmen (2) angeordneten Hauptakku, wobei der Antriebsakku ein Zusatzakku (6) ist.
